# EUROPÄISCHE PATENTANMELDUNG

(11) **EP 2 595 262 A2**
(43) Veröffentlichungstag der Anmeldung: **22.05.2013**
(21) Anmeldenummer: 12183792.6
(22) Anmeldetag: 11.09.2012
(51) Int. Cl.: H02G 3/14, G09F 7/00

(54) **Elektrisches/elektronisches Installationsgerät**

(30) Priorität: 18.11.2011 DE 102011055489
(71) Anmelder: Albrecht Jung GmbH & Co. KG, 58579 Schalksmühle (DE)
(72) Erfinder: Rodemann, Burkhard, 58579 Schalksmühle (DE)

(57) **Zusammenfassung**

Es wird ein elektrisches/elektronisches Installationsgerät vorgeschlagen, welches mit einer Kennzeichnungseinrichtung ausgerüstet ist, die zumindest teilweise von Elementen gebildet wird, die an dem, das Installationsgerät umgebenden, Designrahmen vorhanden sind. Zu dem Zweck, ein elektrisches/elektronisches Installationsgerät zu schaffen, bei welchem die Kennzeichnungseinrichtung aus besonders wenigen, einfach zu realisierenden, Teilen besteht, so dass der montagetechnische Aufwand auf ein Minimum beschränkt ist, besteht der Designrahmen einstückig zumindest teilweise aus transparentem Material, welches zumindest einseitig mit einer blickdichten Beschichtung versehen ist und wobei die Kennzeichnung der Kennzeichnungseinrichtung zumindest teilweise durch partielle Entfernung und/oder partielles Nichtauftragen der blickdichten Beschichtung gebildet ist.

## Beschreibung

Die vorliegende Erfindung geht von einem gemäß Oberbegriff des Hauptanspruchs konzipierten elektrischen/elektronischen Installationsgerät für die Gebäudesystemtechnik aus.

Derartige elektrische/elektronische Installationsgeräte sind in der Regel dafür vorgesehen, in sogenannte Installationsdosen montiert zu werden. Damit auf einfache Art und Weise eine zuverlässige Befestigung der elektrischen/elektronischen Installationsgeräte gewährleistet ist, ist normalerweise ein Träger vorgesehen und sind diese mit sogenannten Spreizkrallen ausgerüstet, welche über Spreizschrauben betrieben werden. Über die Spreizschrauben können die Spreizkrallen je nach Bedarf in eine zurückgezogene "Parkposition" und eine ausgefahrene "Festlegungsposition" verstellt werden. In der Regel sind solche elektrischen/elektronischen Installationsgeräte auch von einem Designrahmen umgeben. Sollte eine Kennzeichnungseinrichtung vorgesehen sein, sind oftmals Elemente einer solchen Kennzeichnungseinrichtung am Designrahmen vorhanden.

Durch die DE 40 13 803 A1 ist ein dem Oberbegriff des Hauptanspruches entsprechendes elektrisches/elektronisches Installationsgerät bekannt geworden. Dieses elektrische/elektronische Installationsgerät weist üblicherweise ein aus Kunststoff bestehendes, zur Aufnahme von Funktionselementen vorgesehenes Gehäuse bzw. Sockelteil auf, an welchem ein Träger befestigt ist. Es ist eine Kennzeichnungseinrichtung vorgesehen, die teilweise von Elementen gebildet wird, die an dem das Installationsgerät umgebenden Designrahmen vorhanden sind. Im vorliegenden Fall besteht der Designrahmen aus einem Rahmenunterteil, auf welchem ein gleichformatiges, transparentes Rahmenoberteil derart aufrastbar ist, dass ein zum Rahmeninneren hin geöffneter Schlitz entsteht, in den ein Kennzeichnungsschild eingeschoben werden kann.

Außerdem ist durch die EP 0 344 641 B1 ein elektrisches/elektronisches Installationsgerät bekannt geworden, dessen Kennzeichnungseinrichtung einen Kennzeichnungsschildhalter aufweist, welcher am Träger befestigt werden kann. In dem Designrahmen ist ein Sichtfenster eingelassen, welches auch als Aufnahme für den Kennzeichnungsschildhalter dient. Im Kennzeichnungsschildhalter ist ein Schubfach vorhanden, in welches das Kennzeichnungsschild eingeschoben werden kann.

Ausgehend von derart ausgebildeten elektrischen/elektronischen Installationsgeräten liegt der vorliegenden Erfindung die Aufgabe zugrunde, ein elektrisches/elektronisches Installationsgerät zu schaffen, bei welchem die Kennzeichnungseinrichtung aus besonders wenigen, einfach zu realisierenden, Teilen besteht, so dass der montagetechnische Aufwand auf ein Minimum beschränkt ist.

Erfindungsgemäß wird diese Aufgabe durch die im Hauptanspruch angegebenen Merkmale gelöst.

Bei einer solchen Ausbildung ist besonders vorteilhaft, dass die Kennzeichnungen der Kennzeichnungseinrichtungen auf besonders einfache Art und Weise in vielfältigen Ausführungen erstellt werden können.

Weitere vorteilhafte Ausgestaltungen des erfindungsgemäßen Gegenstandes sind in den Unteransprüchen angegeben. Anhand zweiter Ausführungsbeispiele sei die Erfindung im Prinzip näher erläutert, dabei zeigen:
- Fig. 1:: prinziphaft ein als Tastschalter ausgeführtes elektrisches/elektronisches Installationsgerät gemäß erstem Ausführungsbeispiel räumlich im Zusammenbau;
- Fig. 2:: prinziphaft den Designrahmen gemäß Figur 1 mit eingeschobenem Kennzeichnungsschild räumlich in der Vorderansicht;
- Fig. 3:: prinziphaft den Designrahmen gemäß Figur 1 mit dem zum Einschub vorbereiteten Kennzeichnungsschild räumlich in der Hinteransicht;
- Fig. 4:: prinziphaft den Tastschalter gemäß Figur 1 ohne Designrahmen und Betätigungselement räumlich im Zusammenbau;
- Fig. 5:: prinziphaft ein als Schutzkontaktsteckdose ausgeführtes elektrisches/elektronisches Installationsgerät gemäß zweitem Ausführungsbeispiel räumlich im Zusammenbau;
- Fig. 6:: prinziphaft den Designrahmen gemäß Figur 5 mit einer direkt in die blickdichte Beschichtung eingebrachten Kennzeichnung räumlich in der Vorderansicht;
- Fig. 7:: prinziphaft den Designrahmen gemäß Figur 5 mit einer direkt in die blickdichte Beschichtung eingebrachten Kennzeichnung räumlich in der Hinteransicht.

Wie aus den Figuren hervorgeht, besteht ein solches elektrisches/elektronisches Installationsgerät im Wesentlichen aus einem aus Kunststoff bestehenden, zur Aufnahme von Funktionselementen vorgesehenen Gehäuse, mit einem Sockelteil 1 an welchem ein Träger 2 festgelegt ist. Es ist eine Kennzeichnungseinrichtung vorgesehen, welche zumindest teilweise von Elementen gebildet wird, die an dem das elektrische/elektronische Installationsgerät umgebenden Designrahmen 3 vorhanden sind. Der Designrahmen 3 besteht einstückig zumindest teilweise aus transparentem Material, welches zumindest einseitig mit einer blickdichten Beschichtung 4 versehen ist.

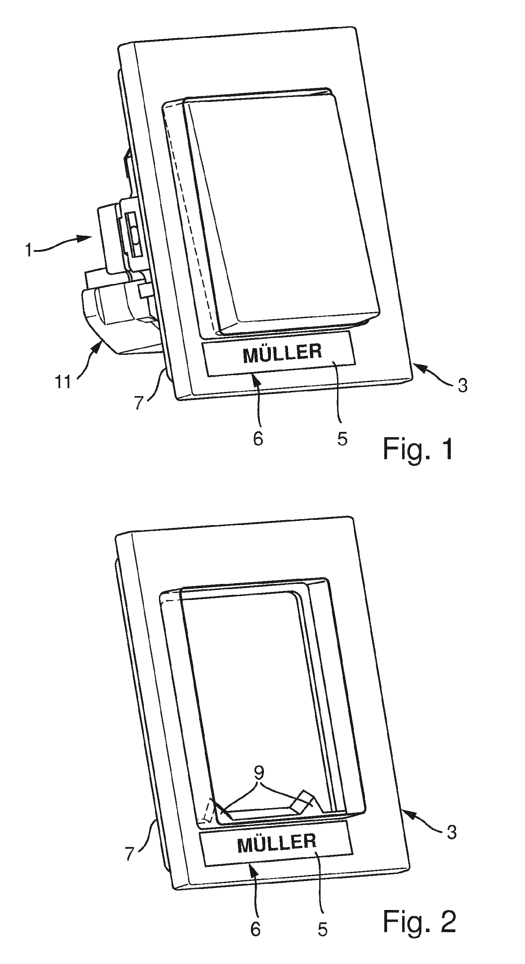

Wie insbesondere aus den Figuren 1 bis 4 hervorgeht, besteht die Kennzeichnungseinrichtung im Wesentlichen aus einem rechteckförmigen Sichtfenster 5, einem Kennzeichnungsschild 6 und einem Kennzeichnungsschildhalter 7. Das rechteckförmige Sichtfenster 5 wurde durch partielle Entfernung der blickdichten Beschichtung 4 gebildet.

Die Kennzeichnung der Kennzeichnungseinrichtung ist gänzlich auf dem am Designrahmen 3 festlegbaren Kennzeichnungsschild 6 vorhanden und besteht aus einer Buchstabenfolge von sechs Buchstaben. Selbstverständlich kann die Kennzeichnung bei Bedarf auch Zahlen, Symbole und/oder Piktogramme aufweisen. Zur Festlegung des Kennzeichnungsschildes 6 ist an der dem Sockelteil 1 zugewandten Rückseite des Designrahmens 3 ein Kennzeichnungsschildhalter 7 vorhanden. Auch die blickdichte Beschichtung 4 ist lediglich auf diese, dem Sockelteil 1 zugewandte, Rückseite des Designrahmens 3 aufgetragen. Die blickdichte Beschichtung 4 ist als Lackschicht ausgeführt. Im vorliegenden Fall besteht der Designrahmen 3 gänzlich aus Glas und der am Designrahmen 3 angebrachte beziehungsweise festgelegte Kennzeichnungsschildhalter 7 aus Kunststoff. Durch Verklipsung ist der Kennzeichnungsschildhalter 7 am Innenbereich des Designrahmens 3 festgelegt. Der Kennzeichnungsschildhalter 7 ist U-förmig ausgebildet und wird durch das Anbringen des Kennzeichnungsschildes 6 zu einem geschlossenen Rahmen ergänzt. Auch das Kennzeichnungsschild 6 ist aus Kunststoff hergestellt. Zur Befestigung des Kennzeichnungsschildes 6 am Kennzeichnungsschildhalter 7 sind miteinander in Wirkverbindung kommende Rastelemente 8 vorgesehen, die an das Kennzeichnungsschild 6 angeformt und entsprechend in den Kennzeichnungsschildhalter 7 eingeformt sind.

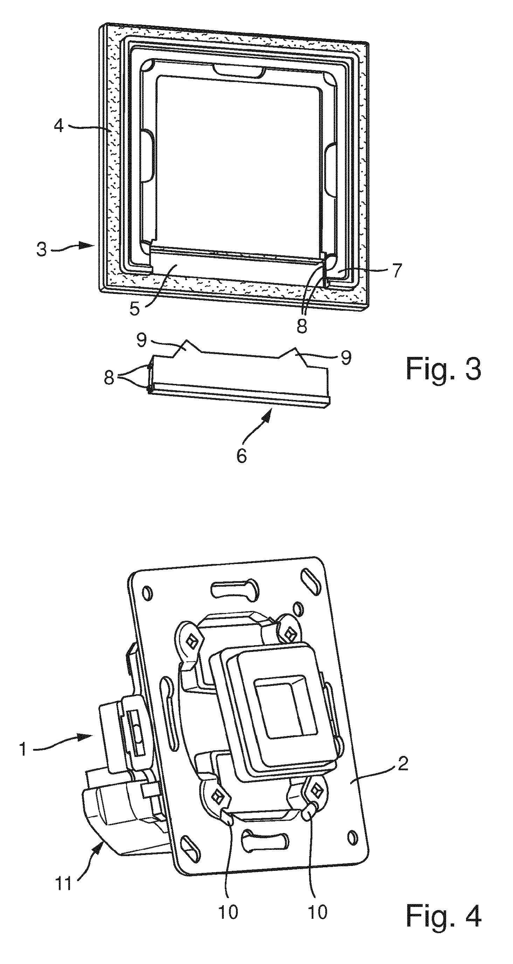

Wie des Weiteren insbesondere aus Figur 3 und Figur 4 hervorgeht, ist die Kennzeichnung der Kennzeichnungseinrichtung beleuchtbar ausgeführt. Zu diesem Zweck ist das Kennzeichnungsschild 6 mit zwei Lichteinkoppelbereichen 9 versehen, welche zwei Lichtauskoppelbereichen 10 der Beleuchtungseinrichtung 11 zugeordnet sind. Im Wesentlichen ist das Kennzeichnungsschild 6 in Art eines Lichtleiters ausgeführt. Die Beleuchtungseinrichtung 11 ist in Art eines Zusatzmoduls am Sockelteil 1 des elektrischen/elektronischen Installationsgerätes festgelegt, wobei die Enden der beiden Lichtauskoppelbereiche 10 in entsprechenden Ausnehmungen zu liegen kommen, die in den Träger 2 eingebracht sind.

Durch eine derartige Ausführung besteht der Vorteil, dass auch Laien das Kennzeichnungsschild 6 austauschen können. Dies ist der Fall, weil ohne jegliche Demontage des elektrischen/elektronischen Installationsgerätes das am Designrahmen 3 festgelegte Kennzeichnungsschild 6 einfach von außen entnommen werden kann. Das Kennzeichnungsschild 6 ist zu diesem Zweck leicht von außen zugänglich, somit kann bei Bedarf auf einfache Art und Weise auch eine Umbezeichnung des elektrischen/elektronischen Installationsgerätes durch den Austausch des Kennzeichnungsschildes 6 erfolgen.

Auf besonders einfache Art und Weise ist somit eine Kennzeichnungseinrichtung für elektrische/elektronische Installationsgerät realisiert, die aus besonders wenigen Teilen besteht, so dass der montagetechnische Aufwand auf ein Minimum beschränkt ist.

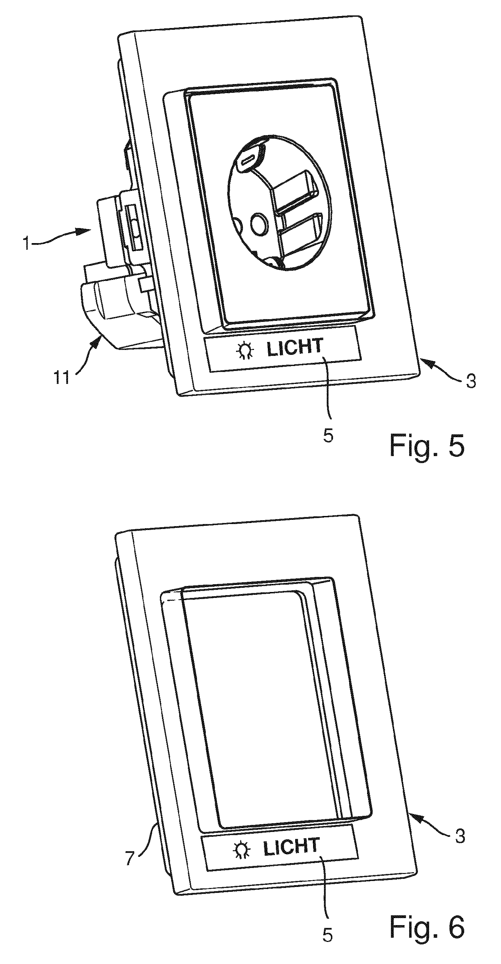

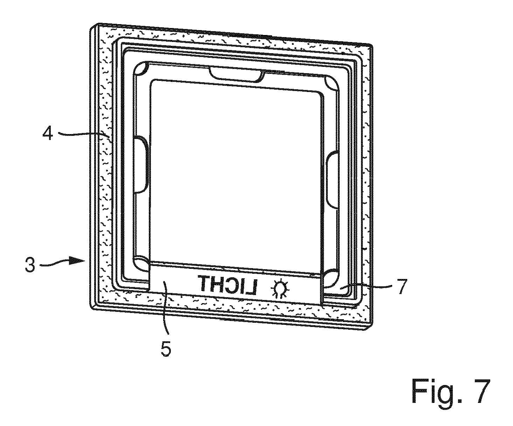

Wie insbesondere aus den Figuren 5 bis 7 hervorgeht, besteht die Kennzeichnungseinrichtung im Wesentlichen aus einem in die blickdichte Beschichtung 4 eingebrachten Sichtfenster 5, wobei die Kennzeichnung innerhalb des Sichtfensters 5 durch partielles Entfernen der blickdichten Beschichtung 4 gebildet ist. Die Kennzeichnung besteht im vorliegenden Fall aus einem Piktogramm (Leuchtmittel) und dem Wort "Licht". Im vorliegenden Fall ist das Sichtfenster 5 durch eine rahmenartige Freimachung in der blickdichten Beschichtung 4 begrenzt. Die Kennzeichnung und das Sichtfenster 5 der Kennzeichnungseinrichtung sind somit gänzlich Bestandteil des Designrahmens 3, ohne dass die Montage eines zusätzlichen Teils notwendig ist. Lediglich durch partielles Entfernen der blickdichten Beschichtung 4 wird die Kennzeichnungseinrichtung auf einfache Art und Weise hergestellt. Die blickdichte Beschichtung 4 ist als Lackschicht ausgeführt und lediglich auf die dem Sockelteil 1 zugewandte Rückseite des Designrahmens 3 aufgetragen. Der Designrahmen 3 besteht im vorliegenden Fall gänzlich aus Glas. Zum partiellen Entfernen der blickdichten Beschichtung 4 von der Rückseite des Designrahmens 3 kann vorteilhafter Weise eine Lasereinrichtung zur Anwendung kommen.

Wie insbesondere aus Figur 5 hervorgeht, ist die Kennzeichnung der Kennzeichnungseinrichtung beleuchtbar ausgeführt. Zu diesem Zweck ist eine Beleuchtungseinrichtung 11 vorgesehen, die in Art eines Zusatzmoduls am Sockelteil 1 des elektrischen/elektronischen Installationsgerätes festgelegt ist. Der Lichtauskoppelbereich der Beleuchtungseinrichtung 11 ist dabei dem Sichtfenster 5 beziehungsweise der im Sichtfenster 5 vorhandenen Kennzeichnung zugeordnet, so dass eine harmonische Ausleuchtung der Kennzeichnung sichergestellt ist.

Auf einfache Art und Weise ist somit, ohne dass zusätzlich Teile zu montieren sind, eine Kennzeichnungseinrichtung für elektrische/elektronische Installationsgeräte realisierbar.

Ohne den Kern der Erfindung zu verlassen, besteht auch die Möglichkeit, mittels einer Lasereinrichtung die Kennzeichnung beziehungsweise einen Teil der Kennzeichnung direkt in den, zu diesem Zweck vorgesehen, Bereich (Sichtfenster 5) des Designrahmens 3 einzubringen. Auf bekannte Art und Weise entsteht dabei die Kennzeichnung beziehungsweise der betreffende Teil der Kennzeichnung durch eine Strukturverletzung innerhalb des Designrahmens 3, hervorgerufen durch die Lasereinrichtung.

## Patentansprüche

1. Elektrisches/elektronisches Installationsgerät für die Gebäudesystemtechnik mit einem aus Kunststoff bestehenden, zur Aufnahme von Funktionselementen vorgesehenen Gehäuse, an dem ein Träger befestigt ist und welches mit einer Kennzeichnungseinrichtung ausgerüstet ist, die zumindest teilweise von Elementen gebildet wird, die an dem das Installationsgerät umgebenden Designrahmen vorhanden sind, **dadurch gekennzeichnet, dass** der Designrahmen (3) einstückig zumindest teilweise aus transparentem Material besteht, welches zumindest einseitig mit einer blickdichten Beschichtung (4) versehen ist und dass die Kennzeichnung der Kennzeichnungseinrichtung zumindest teilweise durch partielle Entfernung und/oder partielles Nichtauftragen der blickdichten Beschichtung (4) gebildet ist.

2. Elektrisches/elektronisches Installationsgerät nach Anspruch 1, **dadurch gekennzeichnet, dass** die Kennzeichnung der Kennzeichnungseinrichtung zumindest zum Teil auf einem am Träger (2) und/oder am Designrahmen (3) festlegbaren Kennzeichnungsschild (6) vorhanden ist.

3. Elektrisches/elektronisches Installationsgerät nach Anspruch 1, **dadurch gekennzeichnet, dass** die Kennzeichnung der Kennzeichnungseinrichtung zumindest zum Teil direkt in das transparente Material des Designrahmens (3) eingebracht ist.

4. Elektrisches/elektronisches Installationsgerät nach einem der Ansprüche 1 bis 3, **dadurch gekennzeichnet, dass** der Designrahmen (3) zumindest teilweise aus Glas besteht.

5. Elektrisches/elektronisches Installationsgerät nach einem der Ansprüche 1 bis 4, **dadurch gekennzeichnet, dass** der Designrahmen (3) zumindest teilweise aus transparentem Kunststoff besteht.

6. Elektrisches/elektrisches Installationsgerät nach einem der Ansprüche 1 bis 5, **dadurch gekennzeichnet, dass** zumindest eine blickdichte Beschichtung (4) als Lackschicht ausgeführt ist.

7. Elektrisches/elektrisches Installationsgerät nach einem der Ansprüche 1 bis 6, **dadurch gekennzeichnet, dass** die Kennzeichnung zumindest einen Buchstaben aufweist.

8. Elektrisches/elektrisches Installationsgerät nach einem der Ansprüche 1 bis 7, **dadurch gekennzeichnet, dass** die Kennzeichnung zumindest eine Zahl aufweist.

9. Elektrisches/elektrisches Installationsgerät nach einem der Ansprüche 1 bis 8, **dadurch gekennzeichnet, dass** die Kennzeichnung zumindest ein Symbol und/oder Piktogramm aufweist.

10. Elektrisches/elektrisches Installationsgerät nach einem der Ansprüche 1 bis 9, **dadurch gekennzeichnet, dass** die Kennzeichnung der Kennzeichnungseinrichtung beleuchtbar ist.

11. Elektrisches/elektrisches Installationsgerät nach einem der Ansprüche 1 bis 10, **dadurch gekennzeichnet, dass** der Designrahmen (3) mit einem Kennzeichnungsschildhalter (7) versehen ist.
